# EUROPÄISCHE PATENTSCHRIFT

(11) **EP 3 587 165 B1**
(45) Veröffentlichungstag und Bekanntmachung des Hinweises auf die Patenterteilung: **29.12.2021**
(21) Anmeldenummer: 19170059.0
(22) Anmeldetag: 18.04.2019
(51) Int. Cl.: B60L 5/39

(54) **STROMABNEHMERANORDNUNG FÜR EIN FAHRZEUG**
COLLECTOR ASSEMBLY FOR A VEHICLE
INSTALLATION DE PRISE DE COURANT POUR UN VÉHICULE

(30) Priorität: 22.06.2018 AT 505202018
(43) Veröffentlichungstag der Anmeldung: 01.01.2020
(73) Patentinhaber: Siemens Mobility Austria GmbH, 1210 Wien (AT)
(72) Erfinder: Hiebaum, Christian, 8077 Gössendorf (AT); Preiss, Mario, 8184 Anger (AT)
(74) Vertreter: Deffner, Rolf

(56) Entgegenhaltungen:
- CN-U- 204 845 580
- DD-A1- 280 297
- DE-B3-102004 019 252

## Beschreibung

Die Erfindung betrifft eine Stromabnehmeranordnung für ein Fahrzeug, insbesondere für ein Schienenfahrzeug, die einen Stromabnehmer mit einem Stromabnehmerarm und einem mit dem Stromabnehmerarm verbundenen Gleitstück zur Stromabnahme von einer Stromschiene sowie einen Träger aufweist, wobei der Stromabnehmer über den Träger mit dem Fahrzeug verbindbar ist.

Stromabnehmer, deren Gleitstücke auf Stromschienen gepresst werden, müssen von der Stromschiene abhebbar ausgeführt sein, um einerseits eine Trennbarkeit des Fahrzeugs von einer Stromversorgung und andererseits betriebliche Auslenkungen des Stromabnehmers zu ermöglichen.

Weiterhin ist es häufig erforderlich, den Stromabnehmer manuell von der Stromschiene abzuheben, d.h. beispielsweise mittels einer isolierten Betätigungsvorrichtung von einem Türbereich oder einer Außenseite des Fahrzeugs aus.

Hierzu ist für gewöhnlich eine Drehmomentenumlenkung zwischen der Betätigungsvorrichtung und dem Stromabnehmerarm erforderlich, damit eine entsprechende Abhebe- oder, für eine Rückstellung des Gleitstücks zu der Stromschiene, Anlegekraft auf das Gleitstück erzeugt werden kann.

Diese Drehmomentenumlenkung wird häufig mittels eines Getriebes (z.B. mittels eines Kegelradgetriebes) ermöglicht, das jedoch oft eine große Masse, einen hohen Konstruktions- und Fertigungsaufwand sowie einen großen Platzbedarf am Fahrzeug (z.B. im Bereich eines Fahrwerks) verursacht.

Aus dem Stand der Technik ist beispielsweise die DD 280 297 A1 bekannt, in welcher ein Stromabnehmer für eine Stromschiene offenbart ist. Der Stromabnehmer weist einen Antrieb, ein Antriebsgestänge, eine Federführung sowie einen Schwenkhebel auf, wobei die Federführung und der Schwenkhebel als Kniehebelgelenk fungieren, um ein Schleifstück über eine Schwenkbewegung an die Stromschiene anzulegen oder davon abzuheben.

Der genannte Ansatz weist in seiner bekannten Form den Nachteil auf, dass keine Betätigung des Stromabnehmers in einer bezüglich der in DD 280 297 A1 dargestellten Arbeitsebene des Stromabnehmers verdrehten Ebene möglich ist.

Der Erfindung liegt die Aufgabe zugrunde, eine gegenüber dem Stand der Technik weiterentwickelte Stromabnehmeranordnung anzugeben, welche eine Betätigung in einer gegen eine Stromabnehmer-Arbeitsebene verdrehten Ebene ermöglicht. Erfindungsgemäß wird diese Aufgabe gelöst mit einer Stromabnehmeranordnung der eingangs genannten Art, bei der mit dem Träger eine erste Welle und eine zweite Welle drehbar verbunden sind, wobei die erste Welle und die zweite Welle gegeneinander verdreht d. h. nicht parallel, angeordnet sind, die zweite Welle mit dem Stromabnehmerarm gekoppelt ist und zwischen der ersten Welle und der zweiten Welle eine Hebelvorrichtung angeordnet ist, welche einen mit der ersten Welle verbundenen ersten Hebel, einen mit der zweiten Welle verbundenen zweiten Hebel sowie eine mit dem ersten Hebel und dem zweiten Hebel gekoppelte Stange aufweist.

Aufgrund einer Verdrehung der ersten Welle und der zweiten Welle gegeneinander wird eine günstige Drehmomentenumlenkung von der ersten Welle auf die zweite Welle und somit beispielsweise von einer mit der ersten Welle verbundenen Betätigungsvorrichtung auf den mit der zweiten Welle gekoppelten Stromabnehmerarm erzielt. Dadurch kann der Stromabnehmer von einem Tür- oder einem Außenbereich des Fahrzeugs betätigt werden, d.h. es erfolgt eine Änderung einer Betätigungsrichtung des Stromabnehmers und es kann somit über die in einem dieser Bereiche geführte Betätigungsvorrichtung eine Abhebe- oder Anlegekraft auf das Gleitstück ausgeübt werden.

Die Hebelvorrichtung ermöglicht eine flexible Bauraumausnutzung und ist insbesondere im Vergleich zu einem Getriebe konstruktiv einfach und somit kostengünstig. Weiterhin weist die Hebelvorrichtung im Vergleich zu einem Getriebe eine geringe Masse auf.

Die Hebelvorrichtung kann schmal ausgeführt sein (beispielsweise können der erste Hebel und der zweite Hebel in einem Bereich mit besonders geringem Bauraumbudget vorgesehen sein), wodurch Freiraumverletzungen vermieden werden.

Es ist günstig wenn der erste Hebel und der zweite Hebel unterschiedliche Hebellängen aufweisen.

Durch diese Maßnahme wird neben einer Drehmomentenumlenkung auch eine Drehmomenten- bzw. Kraftübersetzung sowie eine Übersetzung eines Betätigungsweges, welcher von der Betätigungsvorrichtung umzusetzen ist, erzielt. Durch geeignete Wahl der Hebellängen werden kleine Betätigungswege erzielt.

Eine vorteilhafte Ausgestaltung erhält man, wenn die erste Welle und die zweite Welle höhenversetzt gegeneinander angeordnet sind.

Durch diese Maßnahme kann, sofern beispielsweise das verfügbare Bauraumbudget in Breitenrichtung des Fahrzeugs besonders klein ist, das verfügbare Bauraumbudget in Höhenrichtung des Fahrzeugs in günstiger Weise genutzt werden.

Nachfolgend wird die Erfindung anhand von Ausführungsbeispielen näher erläutert.

Es zeigen beispielhaft:
- Fig. 1:: Einen Seitenriss einer beispielhaften Ausführungsvariante einer erfindungsgemäßen Stromabnehmeranordnung in einem ersten Zustand, in welchem ein Gleitstück von einer Stromschiene abgehoben ist, und
- Fig. 2:: Einen Seitenriss der in Fig. 1 gezeigten beispielhaften Ausführungsvariante einer erfindungsgemäßen Stromabnehmeranordnung in einem zweiten Zustand, in welchem das Gleitstück an der Stromschiene anliegt.

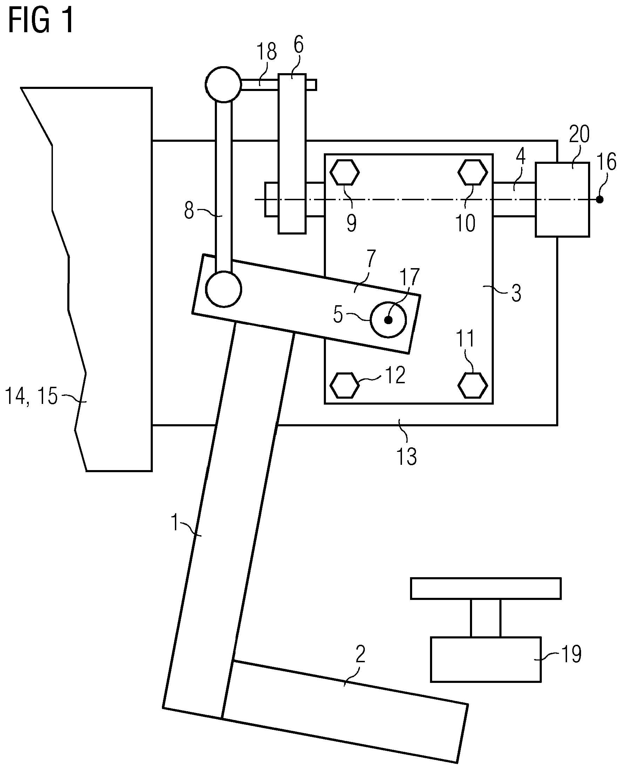

Eine in Fig. 1 als Seitenriss dargestellte, beispielhafte Ausführungsvariante einer erfindungsgemäßen Stromabnehmeranordnung weist einen Stromabnehmerarm 1 und ein Gleitstück 2, welche einen Stromabnehmer bilden, sowie einen Träger 3 auf, über welchen die Stromabnehmeranordnung mit einem nur ausschnittsweise gezeigten Fahrwerk eines nicht dargestellten Schienenfahrzeugs verbunden ist. Erfindungsgemäß ist es auch vorstellbar, dass das Gleitstück 2 als Schleifschuh ausgeführt ist.

Der Träger 3 ist über eine erste Sechskantschraube 9, eine zweite Sechskantschraube 10, eine dritte Sechskantschraube 11 sowie eine vierte Sechskantschraube 12 mit einer Konsole 13, welche mit einem Längsträger 14 eines Fahrwerksrahmens 15 des Fahrwerks verschweißt ist, verbunden.

In dem Träger 3 sind eine erste Welle 4 und eine zweite Welle 5 drehbar gelagert. Eine erste Längsachse 16 der ersten Welle 4 ist gegen eine in Fig. 1 projizierend erscheinende zweite Längsachse 17 der zweiten Welle 5 um 90° verdreht angeordnet, wodurch eine Drehmomentenumlenkung von der ersten Welle 4 auf die zweite Welle 5 ermöglicht wird.

Die erste Welle 4 und die zweite Welle 5 sind demnach um 90° gegeneinander verdreht angeordnet. Erfindungsgemäß sind jedoch auch andere Winkel als 90°, d.h. beliebige Winkel außer 0° und 180° denkbar.

Mit der ersten Welle 4 ist ein erster Hebel 6 fest verbunden, d.h. der erste Hebel 6 kann sich mit der ersten Welle 4 mitdrehen.

Mit der zweiten Welle 5 ist ein zweiter Hebel 7 fest verbunden, d.h. der zweite Hebel 7 kann sich mit der zweiten Welle 5 mitdrehen.

Zwischen dem ersten Hebel 6 und dem zweiten Hebel 7 ist eine Stange 8 vorgesehen, welche über einen ersten Verbindungsbolzen 18 kugelgelenkig mit dem ersten Hebel 6 und über einen nicht gezeigten zweiten Verbindungsbolzen kugelgelenkig mit dem zweiten Hebel 7 verbunden ist.

Der erste Hebel 6, der zweite Hebel 7 sowie die Stange 8 sind Komponenten einer Hebelvorrichtung zur Übertragung von Kräften und Drehmomenten von der ersten Welle 4 auf den Stromabnehmerarm 1 und auf das Gleitstück 2.

Mit dem zweiten Hebel 7 ist der Stromabnehmerarm 1 verbunden und somit mit der zweiten Welle 5 gekoppelt. Erfindungsgemäß ist es jedoch auch vorstellbar, den Stromabnehmerarm 1 unmittelbar mit der zweiten Welle 5 fest zu verbinden.

Der Stromabnehmerarm 1 bewegt sich mit der zweiten Welle 5 bzw. mit dem zweiten Hebel 7 mit. Mit dem Stromabnehmerarm 1 ist das Gleitstück 2, um 90° gegen den Stromabnehmerarm 1 verdreht, fest verbunden.

Es ist an einem unteren Ende des Stromabnehmerarms 1 vorgesehen und kann, aufgrund einer Übertragung von Kräften und Drehmomenten von der ersten Welle 4 auf das Gleitstück 2, von unten an eine Stromschiene 19 gedrückt werden.

Fig. 1 zeigt einen ersten Zustand, in welchem das Gleitstück 2 von der Stromschiene 19 abgehoben ist. Zum Abheben des Gleitstücks 2 von der Stromschiene 19 wird, beispielsweise von einem nicht gezeigten Türbereich des Schienenfahrzeugs aus, eine ebenfalls nicht dargestellte, als isolierte Betätigungsstange ausgebildete Stromabnehmer-Betätigungsvorrichtung mit einem Adapter 20, welcher mit der ersten Welle 4 verbunden ist, gekoppelt. Die Stromabnehmer-Betätigungsvorrichtung ist demnach über den Adapter 20 mit der ersten Welle 4 verbunden.

Mittels der Stromabnehmer-Betätigungsvorrichtung wird der Adapter 20 und somit die erste Welle 4 in einer Weise verdreht, dass der erste Hebel 6 eine Schwenkbewegung nach oben ausführt und, über den ersten Verbindungsbolzen 18, die Stange 8 mitzieht. Aufgrund einer Bewegung der Stange 8 und deren Verbindung mit dem zweiten Hebel 7 über den zweiten Verbindungsbolzen schwenkt der zweite Hebel 7 aus bzw. vollzieht eine Drehbewegung im Uhrzeigersinn, wobei als Drehachse die zweite Längsachse 17 der zweiten Welle 5 fungiert. Dadurch führen wiederum der Stromabnehmerarm 1 und das Gleitstück 2 eine Schwenkbewegung aus, wobei sich das Gleitstück 2 nach unten bewegt und folglich von der Stromschiene 19 abhebt.

In diesem ersten Zustand ist ein nicht gezeigter, auf der ersten Welle 4 angeordneter Schnappverschluss in einer ebenfalls nicht dargestellten Verschlussraste, welche in dem Träger 3 vorgesehen ist, eingerastet.

Der Stromabnehmer ist somit in diesem ersten Zustand arretiert.

Erfindungsgemäß ist es auch vorstellbar, dass die Stromschiene 19 um 180° verdreht in Bezug auf die in Fig. 1 dargestellte Ausführungsvariante angeordnet ist und das Gleitstück 2 die Stromschiene 19 von oben berührt, wobei mittels der Stromabnehmer-Betätigungsvorrichtung Bewegungen zum Abheben und Anlegen des Gleitstücks 2 mit an die um 180° verdrehte Anordnung der Stromschiene 19 angepassten Bewegungsrichtungen ausgeführt werden.

Weiterhin ist die erfindungsgemäße Stromabnehmeranordnung auch für sämtliche Winkellagen zwischen 0° und 180° der Stromschiene 19 anwendbar.

Weiterhin ist es vorstellbar, dass mit der ersten Welle 4 eine Antriebseinheit verbunden ist, womit Abhebe- und Anlegevorgänge des Gleitstücks 2 automatisiert durchgeführt werden können.

Ferner ist es denkbar, dass die Stromabnehmeranordnung nicht mit dem Fahrwerksrahmen 15, sondern beispielsweise mit einem Radsatzlagergehäuse oder mit einem Wagenkasten etc. verbunden ist.

Darüber hinaus ist es auch vorstellbar, die erfindungsgemäße Stromabnehmeranordnung auch für Elektrobusse, Elektrolastkraftwagen und Elektroautos etc. und Stromschienen 19, die am Rand einer Fahrbahn vorgesehen oder in die Fahrbahn integriert sind, einzusetzen.

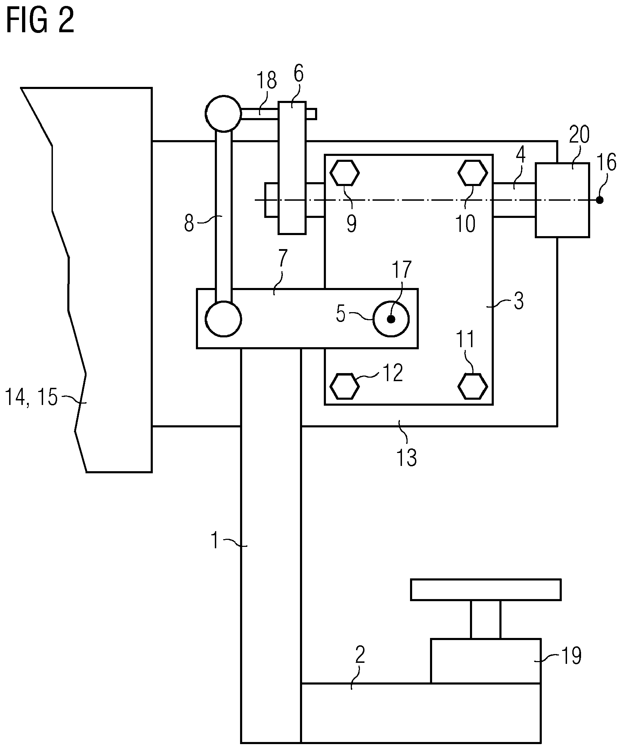

Fig. 2 zeigt jene beispielhafte Ausführungsvariante einer erfindungsgemäßen Stromabnehmeranordnung für ein Schienenfahrzeug, welche auch in Fig. 1 dargestellt ist. Es werden daher in Fig. 2 gleiche Bezugszeichen wie in Fig. 1 verwendet.

Im Unterschied zu Fig. 1 zeigt Fig. 2 einen zweiten Zustand der Stromabnehmeranordnung, in welchem ein Gleitstück 2 an einer Stromschiene 19 anliegt und somit das Schienenfahrzeug mit Elektrizität versorgt wird.

Zum Anlegen des Gleitstücks 2 an die Stromschiene 19 wird eine nicht dargestellte Stromabnehmer-Betätigungsvorrichtung mit einem Adapter 20, welcher mit einer ersten Welle 4 verbunden ist, gekoppelt. Mittels der Stromabnehmer-Betätigungsvorrichtung wird der Adapter 20 und somit die erste Welle 4 in einer Weise verdreht, dass ein nicht gezeigter Schnappverschluss aus einer ebenfalls nicht gezeigten Verschlussraste ausklinkt, ein mit der ersten Welle 4 fest verbundener erster Hebel 6 eine Schwenkbewegung nach unten ausführt und eine über einen ersten Verbindungsbolzen 18 mit dem ersten Hebel 6 verbundene Stange 8 mitzieht. Aufgrund einer Bewegung der Stange 8 und deren Verbindung mit einem zweiten Hebel 7 über einen zweiten Verbindungsbolzen schwenkt der zweite Hebel 7 aus bzw. vollzieht eine Drehbewegung gegen den Uhrzeigersinn, wobei als Drehachse eine zweite Längsachse 17 einer zweiten Welle 5, welche fest mit dem zweiten Hebel 7 verbunden ist, fungiert. Dadurch führen wiederum ein Stromabnehmerarm 1, welcher mit dem zweiten Hebel 7 verbunden ist, und das mit dem Stromabnehmerarm 1 verbundene Gleitstück 2 eine Schwenkbewegung aus, wobei sich das Gleitstück 2 nach oben bewegt und sich folglich an die Stromschiene 19 anlegt.

Um bei an der Stromschiene 19 anliegendem Gleitstück 2 einen Ausgleich von Höhenfehlern der Stromschiene 19 zu bewirken sowie Kontaktunterbrechungen zwischen dem Gleitstück 2 und der Stromschiene 19 zu vermeiden, ist zwischen einem mit dem Schienenfahrzeug verbundenen Träger 3 und dem Stromabnehmerarm 1 eine nicht dargestellte Federvorrichtung vorgesehen, welche Rückstellkräfte auf das Gleitstück 2 ausübt, wodurch ein unbeabsichtigtes Abheben des Gleitstücks 2 von der Stromschiene 19 vermieden wird.

Sofern keine Stromabnehmer-Betätigungsvorrichtung eingesetzt ist, erfolgt, nach einem manuellen oder automatischen Ausklinken des Schnappverschlusses aus der Verschlussraste, mittels dieser Federvorrichtung ein automatisches Anlegen des Gleitstücks 2 an die Stromschiene 19.

### Liste der Bezeichnungen

- 1: Stromabnehmerarm
- 2: Gleitstück
- 3: Träger
- 4: Erste Welle
- 5: Zweite Welle
- 6: Erster Hebel
- 7: Zweiter Hebel
- 8: Stange
- 9: Erste Sechskantschraube
- 10: Zweite Sechskantschraube
- 11: Dritte Sechskantschraube
- 12: Vierte Sechskantschraube
- 13: Konsole
- 14: Längsträger
- 15: Fahrwerksrahmen
- 16: Erste Längsachse
- 17: Zweite Längsachse
- 18: Erster Verbindungsbolzen
- 19: Stromschiene
- 20: Adapter

## Patentansprüche

1. Stromabnehmeranordnung für ein Fahrzeug, insbesondere für ein Schienenfahrzeug, die einen Stromabnehmer mit einem Stromabnehmerarm und einem mit dem Stromabnehmerarm verbundenen Gleitstück zur Stromabnahme von einer Stromschiene sowie einen Träger aufweist, wobei der Stromabnehmer über den Träger mit dem Fahrzeug verbindbar ist, wobei mit dem Träger (3) eine erste Welle (4) und eine zweite Welle (5) drehbar verbunden sind, **dadurch gekennzeichnet, dass** die erste Welle (4) und die zweite Welle (5) gegeneinander verdreht angeordnet sind, so dass eine erste Längsachse (16) der ersten Welle (4) und eine zweite Längsachse (17) der zweiten Welle (5) nicht parallel zueinander angeordnet sind, die zweite Welle (5) mit dem Stromabnehmerarm (1) gekoppelt ist und zwischen der ersten Welle (4) und der zweiten Welle (5) eine Hebelvorrichtung angeordnet ist, welche einen mit der ersten Welle (4) verbundenen ersten Hebel (6), einen mit der zweiten Welle (5) verbundenen zweiten Hebel (7) sowie eine mit dem ersten Hebel (6) und dem zweiten Hebel (7) gekoppelte Stange (8) aufweist.

2. Stromabnehmeranordnung nach Anspruch 1, **dadurch gekennzeichnet, dass** der erste Hebel (6) und der zweite Hebel (7) unterschiedliche Hebellängen aufweisen.

3. Stromabnehmeranordnung nach Anspruch 1 oder 2, **dadurch gekennzeichnet, dass** die erste Welle (4) und die zweite Welle (5) höhenversetzt gegeneinander angeordnet sind.

4. Stromabnehmeranordnung nach einem der Ansprüche 1, 2 oder 3, **dadurch gekennzeichnet, dass** mit der ersten Welle (4) eine Stromabnehmer-Betätigungsvorrichtung verbindbar ist.

5. Stromabnehmeranordnung nach einem der Ansprüche 1 bis 4, **dadurch gekennzeichnet, dass** der Stromabnehmer über den Träger (3) mit einem Fahrwerk des Fahrzeugs verbindbar ist.

6. Stromabnehmeranordnung nach einem der Ansprüche 1 bis 4, **dadurch gekennzeichnet, dass** der Stromabnehmer über den Träger (3) mit einem Wagenkasten des Fahrzeugs verbindbar ist.

## Claims

1. Current collector assembly for a vehicle, in particular for a rail vehicle, which comprises a current collector with a current collector arm and a sliding piece connected to the current collector arm for current collection from a power rail, and has a carrier, the current collector being connectable to the vehicle by means of the carrier, wherein a first shaft (4) and a second shaft (5) are rotatably linked to the carrier (3), **characterised in that** the first shaft (4) and the second shaft (5) are arranged rotated relative to one another so that a first longitudinal axis (16) of the first shaft (4) and a second longitudinal axis (17) of the second shaft (5) are not arranged parallel to one another, the second shaft (5) is coupled to the current collector arm (1) and arranged between the first shaft (4) and the second shaft (5) is a lever device which has a first lever (6) connected to the first shaft (4), a second lever (7) connected to the second shaft (5) and a rod (8) coupled to the first lever (6) and the second lever (7).

2. Current collector assembly according to claim 1, **characterised in that** the first lever (6) and the second lever (7) have different lever lengths.

3. Current collector assembly according to claim 1 or 2, **characterised in that** the first shaft (4) and the second shaft (5) are arranged offset in height relative to one another.

4. Current collector assembly according to one of claims 1, 2 or 3, **characterised in that** a current collector actuating device is connectable to the first shaft (4).

5. Current collector assembly according to one of claims 1 to 4, **characterised in that** the current collector is connectable via the carrier (3) to a chassis of the vehicle.

6. Current collector assembly according to one of claims 1 to 4, **characterised in that** the current collector is connectable via the carrier (3) to the carriage superstructure of the vehicle.

## Revendications

1. Installation de prise de courant pour un véhicule, en particulier pour un véhicule ferroviaire, qui comprend une prise de courant avec un bras de prise de courant et une pièce coulissante reliée au bras de prise de courant pour le captage de courant par un rail conducteur ainsi qu'un support, dans laquelle la prise de courant peut être reliée au véhicule par l'intermédiaire du support, dans laquelle un premier arbre (4) et un deuxième arbre (5) sont reliés à rotation au support (3), **caractérisée en ce que**
le premier arbre (4) et le deuxième arbre (5) sont disposés en étant tournés l'un par rapport à l'autre de sorte qu'un premier axe longitudinal (16) du premier arbre (4) et un deuxième axe longitudinal (17) du deuxième arbre (5) ne soient pas disposés parallèlement l'un à l'autre,
le deuxième arbre (5) est accouplé au bras de prise de courant (1) et un dispositif à leviers est disposé entre le premier arbre (4) et le deuxième arbre (5), lequel dispositif à leviers comprend un premier levier (6) relié au premier arbre (4), un deuxième levier (7) relié au deuxième arbre (5) ainsi qu'une tige (8) accouplée au premier levier (6) et au deuxième levier (7).

2. Installation de prise de courant selon la revendication 1, **caractérisée en ce que** le premier levier (6) et le deuxième levier (7) présentent des longueurs de levier différentes.

3. Installation de prise de courant selon la revendication 1 ou la revendication 2, **caractérisée en ce que** le premier arbre (4) et le deuxième arbre (5) sont disposés en étant décalés en hauteur l'un par rapport à l'autre.

4. Installation de prise de courant selon l'une des revendications 1, 2 ou 3, **caractérisée en ce qu'**un dispositif d'actionnement de prise de courant peut être relié au premier arbre (4).

5. Installation de prise de courant selon l'une des revendications 1 à 4, **caractérisée en ce que** la prise de courant peut être reliée à un châssis du véhicule par l'intermédiaire du support (3).

6. Installation de prise de courant selon l'une des revendications 1 à 4, **caractérisée en ce que** la prise de courant peut être reliée à une caisse de wagon du véhicule par l'intermédiaire du support (3).
